# EUROPEAN PATENT APPLICATION

(11) **EP 4 410 417 A1**
(43) Date of publication of application: **07.08.2024**
(21) Application number: 22876228.2
(22) Date of filing: 27.09.2022
(51) Int. Cl.: B01J 20/04, B01D 53/14, B01J 20/30

(54) **ADSORBENT AND METHOD FOR PRODUCING ADSORBENT**

(30) Priority: 28.09.2021 JP 2021157712
(71) Applicant: DAIKIN INDUSTRIES, LTD., Osaka 530-0001 (JP); The University of Tokyo, Bunkyo-ku, Tokyo 113-8654 (JP)
(72) Inventor: MATSUOKA, Takuya, Osaka-shi, Osaka 530-0001 (JP); NISHIMURA, Mayu, Osaka-shi, Osaka 530-0001 (JP); SAKATA, Ichiro, Tokyo 113-8654 (JP); FUGETSU, Bunshi, Tokyo 113-8654 (JP); ADAVAN KILIYANKIL, Vipin, Tokyo 113-8654 (JP); UEKI, Takayuki, Tokyo 113-8654 (JP)
(74) Representative: Hoffmann Eitle
(86) International application number: PCT/JP2022/035951
(87) International publication number: WO 2023/054362

(57) **Abstract**

[Object] To suppress a decrease in the adsorption performance of an adsorbent containing diatomaceous earth and a basic compound.

[Solution] An adsorbent for adsorbing an acid gas contains diatomaceous earth, a basic compound, and a saccharide.

## Description

### Technical Field

The present disclosure relates to an adsorbent and a method for producing an adsorbent.

### Background Art

PTL 1 discloses a hydrogen sulfide gas removing agent in which an iron (III) salt and an alkali are supported on a carrier such as diatomaceous earth.

### Citation List

### Patent Literature

PTL 1: Japanese Unexamined Patent Application Publication No. 2011-235244

### Summary of Invention

### Technical Problem

For adsorbents containing diatomaceous earth and a basic compound, when the basic compound undergoes crystallization, the effective surface area in which a reaction with an acid gas to be adsorbed is caused decreases, which may decrease the adsorption performance for the acid gas.

An object of the present disclosure is to suppress a decrease in the adsorption performance of the adsorbent containing diatomaceous earth and a basic compound. Solution to Problem

An adsorbent according to the present disclosure is an adsorbent for adsorbing an acid gas, and contains diatomaceous earth, a basic compound, and a saccharide.

Herein, the saccharide is glucose.

The basic compound is an alkali metal carbonate.

The content of the basic compound is equal to or less than the content of the diatomaceous earth.

The content of the saccharide is equal to or less than the content of the diatomaceous earth.

In another aspect, a method for producing an adsorbent according to the present disclosure is a method for producing an adsorbent for adsorbing an acid gas, and includes a step of producing a dispersion in which a basic compound and a saccharide are dispersed in water, a step of producing a mixture in which the dispersion and diatomaceous earth are mixed, and a step of removing water from the mixture.

### Advantageous Effects of Invention

According to the present disclosure, a decrease in the adsorption performance of an adsorbent containing diatomaceous earth and a basic compound can be suppressed. Description of Embodiments

Hereafter, embodiments of the present disclosure will be described in detail.

### <Adsorbent>

An adsorbent according to an embodiment of the present disclosure contains diatomaceous earth, a basic compound, and a saccharide. In addition to the diatomaceous earth, the basic compound, and the saccharide, the adsorbent may optionally contain, for example, other additives and a reaction product obtained through a reaction of the diatomaceous earth, the basic compound, and the saccharide.

The adsorbent holds the basic compound and the saccharide inside a plurality of pores formed in the diatomaceous earth.

The adsorbent according to the present embodiment adsorbs an acidic gas (hereinafter referred to as an acid gas). As will be described in detail later, in the adsorbent, the basic compound undergoes a neutralization reaction with the acid gas to be adsorbed by the adsorbent to form a salt. As a result, the acid gas to be adsorbed by the adsorbent is removed. Furthermore, when the acid gas to be adsorbed by the adsorbent is a gas having an odor, the concentration of the gas having an odor is reduced by removing the acid gas.

Next, each component constituting the adsorbent according to the present embodiment will be described in order.

### (Diatomaceous earth)

Diatomaceous earth is mainly composed of a soil formed by sedimentation of shells of diatoms, and contains silicon dioxide as a main component. The diatomaceous earth is classified into marine diatomaceous earth and freshwater diatomaceous earth, either of which may be used.

The diatomaceous earth has a porous structure in which a plurality of pores communicating with each other are formed. Some of the plurality of pores formed in the diatomaceous earth reach the outside of the diatomaceous earth. The pore diameter of the plurality of pores formed in the diatomaceous earth is in the range of about 0.1 µm to several tens of micrometers, though the pore diameter varies depending on the type, production area, and the like of the diatomaceous earth.

The diatomaceous earth has a porous structure, and thus can adsorb water inside the pores. As a result, water is adsorbed inside the pores in a high-humidity environment, thereby suppressing the release of the basic compound and the saccharide from the diatomaceous earth by water present around the adsorbent.

The diatomaceous earth has a large surface area because of its porous structure. Thus, the diatomaceous earth can hold a larger amount of the basic compound inside the plurality of pores. This can promote a neutralization reaction between the acid gas to be adsorbed by the adsorbent and the basic compound.

### (Basic compound)

As described above, the basic compound is held inside the plurality of pores formed in the diatomaceous earth. The basic compound may be present not only inside the plurality of pores formed in the diatomaceous earth but also outside the pores. As will be described in detail later, in the adsorbent according to the present embodiment, the crystallization of the basic compound is suppressed by the action of a saccharide described later, and the basic compound is held in the diatomaceous earth.

The basic compound undergoes a neutralization reaction with the acid gas to be adsorbed by the adsorbent to form a salt.

The basic compound is not limited as long as it is water-soluble and crystalline and forms a salt through a neutralization reaction with the acid gas to be adsorbed. Examples of such a basic compound include alkali metal carbonates, alkali metal phosphates, and alkali metal hydroxides. Among these, the basic compound is preferably an alkali metal carbonate and more preferably potassium carbonate from the viewpoint of ease of suppressing crystallization by a saccharide described later, stability in the adsorbent, cost, and the like.

### (Saccharide)

As described above, the saccharide is held inside the plurality of pores formed in the diatomaceous earth. The saccharide may be present not only inside the plurality of pores formed in the diatomaceous earth but also outside the pores.

In the adsorbent according to the present embodiment, oxygen atoms derived from oxygen in the air bond to carbon derived from the saccharide and obtained through heating, whereby C(O) is formed on the surface of the saccharide. When the acid gas to be adsorbed is, for example, weakly acidic H₂S, this C(O) serves as a starting point of the oxidation reaction, and H₂S is oxidized. When H₂S is oxidized, the neutralization reaction with a basic compound is facilitated. Thus, the adsorbent according to the present embodiment can remove not only acid gases having high acidity, such as SO₂, but also weakly acidic H₂S.

As will be described in detail later, the saccharide serves as a crystallization inhibitor for suppressing crystallization of the basic compound.

The saccharide is sometimes dissolved or dispersed in water before use in the production of the adsorbent. Therefore, the saccharide is preferably soluble or dispersible in water. The saccharide may be any of, for example, monosaccharides, disaccharides, oligosaccharides, and polysaccharides as long as the saccharide can be dissolved or dispersed in water. Examples of such a water-soluble or water-dispersible saccharide include glucose, sucrose, and starch. Among these, glucose is preferably used because glucose is highly effective for suppressing crystallization of the basic compound. The glucose may be either D-glucose or L-glucose because the same effect is achieved, but D-glucose is preferably used from the viewpoint of cost and the like.

### (Other substances)

The adsorbent may contain a crystalline compound such as KH(Si₂O₅).

Such a crystalline compound may contribute to, in the adsorbent, removal of acid gases through a neutralization reaction with the acid gas to be adsorbed.

The adsorbent may further contain carbon spheres formed by heating a saccharide. The carbon spheres are spherical carbon particles having an average particle diameter of about several hundred nanometers.

The adsorbent may also contain a publicly known binder from the viewpoint of improving the strength of the adsorbent. The binder is not limited, and may be, for example, cellulose derivatives such as methylcellulose, ethylcellulose, propylcellulose, carboxymethylcellulose, carboxyethylcellulose, hydroxymethylcellulose, and hydroxyethylcellulose; polyvinyl alcohol; and an acrylic resin.

### (Content)

In the adsorbent according to the present embodiment, the content of the basic compound varies depending on, for example, the types of basic compound and saccharide, but can be, for example, in the range of 50 parts by mass or more and 150 parts by mass or less relative to 100 parts by mass of the diatomaceous earth.

When the basic compound is an alkali metal carbonate, the content of the basic compound is preferably in the range of 50 parts by mass or more and 100 parts by mass or less relative to 100 parts by mass of diatomaceous earth. In other words, in the adsorbent according to the present embodiment, when the basic compound is an alkali metal carbonate, the content of the basic compound is preferably equal to or less than the content of the diatomaceous earth. This makes it possible to extend the life span of the adsorbent as compared with the case where the content of the basic compound is more than the content of the diatomaceous earth.

In the adsorbent according to the present embodiment, the content of the saccharide varies depending on, for example, the types of basic compound and saccharide, but can be, for example, in the range of 50 parts by mass or more and 150 parts by mass or less relative to 100 parts by mass of the diatomaceous earth.

When the saccharide is glucose, the content of the saccharide is preferably in the range of 50 parts by mass or more and 100 parts by mass or less relative to 100 parts by mass of the diatomaceous earth. In other words, in the present embodiment, when the saccharide is glucose, the content of the saccharide is preferably equal to or less than the content of the diatomaceous earth. This makes it possible to extend the life span of the adsorbent as compared with the case where the content of the saccharide is more than the content of the diatomaceous earth.

### Method for producing adsorbent

Next, one example of a method for producing an adsorbent according to the present embodiment will be described. The adsorbent according to the present embodiment can be produced, for example, as follows.

First, a dispersion in which a basic compound and a saccharide are dispersed is produced. The dispersion is obtained by, for example, mixing a liquid in which a basic compound is dissolved in water and a liquid in which a saccharide is dissolved or dispersed in water.

The dispersion is then mixed with diatomaceous earth to produce a mixture. The mixture is obtained, for example, by gradually adding diatomaceous earth to the dispersion while stirring the dispersion.

The mixture is then subjected to a vacuum degassing treatment using a vacuum degassing mixer or the like to remove gas from the pores formed in the diatomaceous earth. This allows the basic compound and the saccharide to easily enter the pores of the diatomaceous earth. The vacuum degassing treatment is not necessarily performed.

Water is then removed from the mixture. As a result, the basic compound and the saccharide dissolved or dispersed in water are precipitated, for example, inside the pores of the diatomaceous earth.

In the step of removing water from the mixture, the crystallization of the basic compound is suppressed by the saccharide contained in the mixture. In the description of the present embodiment, the phrase "the crystallization of the basic compound is suppressed" does not mean that the basic compound is not crystallized at all, but means that the crystal size of the basic compound precipitated by removing water from the mixture is smaller than that in the case where the saccharide is not contained.

In the present embodiment, the crystallization of the basic compound is suppressed by the saccharide, which can increase the effective surface area of the adsorbent for a neutralization reaction of the basic compound with the acid gas. Accordingly, a decrease in the adsorption performance of the adsorbent for the acid gas can be suppressed.

Examples of the method for removing water from the mixture include heat drying, spin drying, and vacuum drying, and heat drying in which the mixture is heated is preferably employed.

By heating the mixture, the crystallization of the basic compound is easily suppressed, and the adsorption performance of the adsorbent for the acid gas may be improved.

When the saccharide used is, for example, a monosaccharide, a disaccharide, or an oligosaccharide, the saccharide is melted by heating the mixture and easily enters the pores of the diatomaceous earth. As a result, the crystallization of the basic compound that has entered the pores of the diatomaceous earth is easily suppressed, which can further increase the effective surface area of the basic compound. In this case, the temperature at which the mixture is heated is preferably equal to or higher than the melting point of the saccharide.

The adsorbent containing the diatomaceous earth, the basic compound, and the saccharide is obtained by the above production method.

The obtained adsorbent may be optionally pulverized and sieved into small pieces having a diameter in a predetermined range.

### Examples

Next, the adsorbent according to the present embodiment will be further described in detail using Examples. The composition of the adsorbent, the method for producing an adsorbent, and the like are not limited to Examples below.

### 1. Production of adsorbent

### (Example 1)

The adsorbent was obtained as follows.

First, 20 g of D(+)-glucose (hereafter simply referred to as glucose) was dissolved in 80 g of deionized water to prepare an aqueous glucose solution. Similarly, 20 g of potassium carbonate was dissolved in 80 g of deionized water to prepare an aqueous potassium carbonate solution.

The aqueous glucose solution and the aqueous potassium carbonate solution were then mixed with each other to produce a dispersion in which the glucose and the potassium carbonate were dispersed in deionized water.

Subsequently, 20 g of diatomaceous earth was gradually added to the dispersion under stirring, and stirring was continuously performed for 10 minutes to produce a mixture in which the diatomaceous earth was mixed in the dispersion.

This mixture was then set in a vacuum degassing mixer and subjected to a vacuum degassing treatment for 10 minutes.

This mixture was then set in an electric furnace and heated at 150°C for 4 hours and at 170°C for 4.5 hours to remove water from the mixture, thereby obtaining a composite containing the diatomaceous earth, potassium carbonate serving as the basic compound, and glucose serving as the saccharide.

Subsequently, the obtained composite was pulverized by using a mortar and a pestle, and then sieved so that the particle diameter was in the range of 2.00 mm to 4.75 mm. Thus, a small-piece adsorbent was obtained. In this adsorbent, the content ratio of diatomaceous earth, potassium carbonate, and glucose is diatomaceous earth:potassium carbonate:glucose = 1:1:1.

### (Example 2)

A small-piece adsorbent containing the diatomaceous earth, potassium carbonate serving as the basic compound, and glucose serving as the saccharide was produced in the same manner as in Example 1, except that the vacuum degassing treatment was not performed after the mixture was produced. In this adsorbent, the content ratio of diatomaceous earth, potassium carbonate, and glucose is diatomaceous earth:potassium carbonate:glucose = 1:1:1.

### (Example 3)

A small-piece adsorbent containing the diatomaceous earth, potassium carbonate serving as the basic compound, and glucose serving as the saccharide was produced in the same manner as in Example 1, except that the amount of glucose in the aqueous glucose solution was changed to 10 g. In this adsorbent, the content ratio of diatomaceous earth, potassium carbonate, and glucose is diatomaceous earth:potassium carbonate:glucose = 1: 1:0.5.

### (Example 4)

A small-piece adsorbent containing the diatomaceous earth, potassium carbonate serving as the basic compound, and glucose serving as the saccharide was produced in the same manner as in Example 1, except that the amount of glucose in the aqueous glucose solution was changed to 30 g. In this adsorbent, the content ratio of diatomaceous earth, potassium carbonate, and glucose is diatomaceous earth:potassium carbonate:glucose = 1:1:1.5.

### (Example 5)

A small-piece adsorbent containing the diatomaceous earth, potassium carbonate serving as the basic compound, and glucose serving as the saccharide was produced in the same manner as in Example 1, except that the amount of potassium carbonate in the aqueous potassium carbonate solution was changed to 10 g. In this adsorbent, the content ratio of diatomaceous earth, potassium carbonate, and glucose is diatomaceous earth:potassium carbonate:glucose = 1:0.5:1.

### (Example 6)

A small-piece adsorbent containing the diatomaceous earth, potassium carbonate serving as the basic compound, and glucose serving as the saccharide was produced in the same manner as in Example 1, except that the amount of potassium carbonate in the aqueous potassium carbonate solution was changed to 30 g. In this adsorbent, the content ratio of diatomaceous earth, potassium carbonate, and glucose is diatomaceous earth:potassium carbonate:glucose = 1:1.5:1.

### (Example 7)

A small-piece adsorbent containing the diatomaceous earth, potassium carbonate serving as the basic compound, and glucose serving as the saccharide was produced in the same manner as in Example 1, except that the mixture after the vacuum degassing treatment was set in an oil bath instead of the electric furnace, preheated at an oil temperature of 100°C for 7 hours, and then heated at an oil temperature of 160°C for 4 hours to remove water, thereby producing a composite. In this adsorbent, the content ratio of diatomaceous earth, potassium carbonate, and glucose is diatomaceous earth:potassium carbonate:glucose = 1:1:1.

### (Example 8)

A small-piece adsorbent containing the diatomaceous earth, potassium carbonate serving as the basic compound, and glucose serving as the saccharide was produced in the same manner as in Example 7, except that the mixture after the vacuum degassing treatment was set in an oil bath, preheated at an oil temperature of 100°C for 7 hours, heated at an oil temperature of 160°C for 4 hours, and then further heated at an oil temperature of 195°C for 4.5 hours. In this adsorbent, the content ratio of diatomaceous earth, potassium carbonate, and glucose is diatomaceous earth:potassium carbonate:glucose = 1:1:1.

### (Example 9)

A dispersion in which sucrose and potassium carbonate were dispersed in deionized water was produced in the same manner as in Example 1, except that sugar (sucrose) was used instead of glucose.

Subsequently, 20 g of diatomaceous earth was gradually added to the dispersion under stirring, and stirring was continuously performed for 10 minutes to produce a mixture in which the diatomaceous earth was mixed in the dispersion.

This mixture was then set in a vacuum degassing mixer and subjected to a vacuum degassing treatment for 10 minutes.

This mixture was then set in an electric furnace and heated at 100°C for 7 hours, at 140°C for 3.5 hours, at 150°C for 3 hours, at 170°C for 4.5 hours, and at 200°C for 4 hours to remove water from the mixture, thereby obtaining a composite containing the diatomaceous earth, potassium carbonate serving as the basic compound, and sucrose serving as the saccharide.

Subsequently, the obtained composite was pulverized by using a mortar and a pestle, and then sieved so that the particle diameter was in the range of 2.00 mm to 4.75 mm in the same manner as in Example 1, thereby obtaining a small-piece adsorbent. In this adsorbent, the content ratio of diatomaceous earth, potassium carbonate, and sucrose is diatomaceous earth:potassium carbonate:sucrose = 1:1:1.

### (Example 10)

A small-piece adsorbent containing the diatomaceous earth, potassium carbonate serving as the basic compound, and sucrose serving as the saccharide was produced in the same manner as in Example 9, except that the amount of sucrose was changed to 10 g. In this adsorbent, the content ratio of diatomaceous earth, potassium carbonate, and sucrose is diatomaceous earth:potassium carbonate:sucrose = 1:1:0.5.

### (Comparative Example 1)

A small-piece adsorbent containing the diatomaceous earth and potassium carbonate serving as the basic compound was produced in the same manner as in Example 1, except that the amount of potassium carbonate in the aqueous potassium carbonate solution was changed to 10 g and the mixture was produced by adding diatomaceous earth to the aqueous potassium carbonate solution without using glucose. In this adsorbent, the content ratio of diatomaceous earth, potassium carbonate, and glucose (sucrose) is diatomaceous earth:potassium carbonate:glucose (sucrose) = 1:0.5:0.

Table 1 shows the type of saccharide, the ratio of diatomaceous earth, saccharide, and basic compound, whether to perform evacuation, the heating method, and the heating temperature for Examples 1 to 10 and Comparative Example 1.

**[Table 1]**

| | Type of saccharide | Content ratio (diatomaceous earth:basic compound: saccharide) | Evacuation | Heating method | Heating temperature |
|---|---|---|---|---|---|
| Example 1 | Glucose | 1:1:1 | Yes | Electric furnace | 150°C→H70°C |
| Example 2 | Glucose | 1:1:1 | No | Electric furnace | 150°C→H70°C |
| Example 3 | Glucose | 1:1:0.5 | Yes | Electric furnace | 150°C→H70°C |
| Example 4 | Glucose | 1:1:1.5 | Yes | Electric furnace | 150°C→H70°C |
| Example 5 | Glucose | 1:0.5:1 | Yes | Electric furnace | 150°C→H70°C |
| Example 6 | Glucose | 1:1.5:1 | Yes | Electric furnace | 150°C→H70°C |
| Example 7 | Glucose | 1:1:1 | Yes | Oil bath | 100°→CH60°C |
| Example 8 | Glucose | 1:1:1 | Yes | Oil bath | 100°C→H60°C→195°C |
| Example 9 | Sucrose | 1:1:1 | Yes | Electric furnace | 100°C→H40°C→150°C →170°C→200°C |
| Example 10 | Sucrose | 1:1:0.5 | Yes | Electric furnace | 100°C→140°C→150°C →170°C→200°C |
| Comparati ve Example 1 | - | 1:0.5:0 | Yes | Electric furnace | 150°C→170°C |

### 2. Sulfur dioxide adsorption test

The adsorbents obtained in Examples 1 to 10 and Comparative Example 1 were tested for adsorption performance using sulfur dioxide as an acid gas to be adsorbed.

### (1) Test method

Air adjusted to have a relative humidity of 45 %RH and contain 20 ppm of sulfur dioxide was continuously passed through the adsorbents obtained in Examples 1 to 10 and Comparative Example 1 so that the SV (space velocity) value was 53,000 h⁻¹. Then, the sulfur dioxide concentration of the air on each of the upstream side and the downstream side of the adsorbent was measured. The adsorption efficiency of sulfur dioxide to each of the adsorbents was calculated based on formula (1) below using the sulfur dioxide concentration on the upstream side and the sulfur dioxide concentration on the downstream side. The time until the adsorption efficiency fell below 85% was defined as a life span of the adsorbent. Adsorption efficieny (%)={1-(sulfur dioxide concentration on downstream side/sulfur dioxide concentration on upstream side)} × 100

In Examples 1 to 7, the adsorption efficiency of sulfur dioxide to each of the adsorbents and the life span of each of the adsorbents were calculated in the same manner as above, except that the humidity of the air containing sulfur dioxide was changed to 20 %RH.

### (2) Test results

Table 2 shows the weight (g) of the obtained adsorbent, the life span (h) measured by the above-described method, and the life span per 1 g of adsorbent (h/g) for Examples 1 to 10 and Comparative Example 1.

**[Table 2]**

| | 45%RH | | | 20%RH | | |
|---|---|---|---|---|---|---|
| | Weight (g) | Life span (h) | Life span/weight (h/g) | Weight (g) | Life span (h) | Life span/weight (h/g) |
| Example 1 | 6.1 | 2.9 | 0.48 | 5.9 | 0.2 | 0.03 |
| Example 2 | 6.4 | 3.4 | 0.53 | 6.6 | 1.0 | 0.15 |
| Example 3 | 7.1 | 3.3 | 0.46 | 8.7 | 1.1 | 0.13 |
| Example 4 | 6.4 | 2.0 | 0.31 | 8.2 | 0.4 | 0.05 |
| Example 5 | 4.4 | 2.1 | 0.48 | 4.3 | 0.2 | 0.05 |
| Example 6 | 13.4 | 1.6 | 0.12 | 13.5 | 0.1 | 0.01 |
| Example 7 | 9.2 | 3.8 | 0.41 | 10.6 | 0.6 | 0.06 |
| Example 8 | 7.6 | 0.9 | 0.12 | - | - | - |
| Example 9 | 9.6 | 0.1 | 0.01 | - | - | - |
| Example 10 | 10.7 | 0.3 | 0.03 | - | - | - |
| Comparative Example 1 | 7.8 | 0.0 | 0.00 | - | - | - |

As shown in Table 2, the adsorbents of Examples 1 to 10 containing the diatomaceous earth, the basic compound, and the saccharide were confirmed to adsorb sulfur dioxide, which is an acid gas, in the sulfur dioxide adsorption test under the conditions of a humidity of 45 %RH and a humidity of 20 %RH. In contrast, the adsorbent of Comparative Example 1 containing no saccharide did not adsorb sulfur dioxide in the sulfur dioxide adsorption test at a humidity of 45 %RH.

As a result, it was confirmed that a decrease in the adsorption performance of the adsorbent containing the diatomaceous earth, the basic compound, and the saccharide could be suppressed as compared to the case where the adsorbent did not contain the saccharide.

The comparison between Examples 1 to 10 showed that the adsorbents of Examples 1 to 8 containing glucose as a saccharide had a longer life span per 1 g of adsorbent than the adsorbents of Examples 9 and 10 containing sucrose as a saccharide in the sulfur dioxide adsorption test at a humidity of 45 %RH.

Thus, it was confirmed that when glucose was used as a saccharide in the adsorbent containing the diatomaceous earth, the basic compound, and the saccharide, the adsorption performance for sulfur dioxide, which is an acid gas, was improved as compared with the case where sucrose was used as a saccharide.

Subsequently, among the adsorbents containing glucose as a saccharide, the adsorbents of Examples 1 and 3 to 6 having different content ratios of the diatomaceous earth, the basic compound, and the saccharide are compared with each other. The adsorbents of Examples 1 and 3 to 5 in which the content of the basic compound was equal to or less than the content of the diatomaceous earth had a longer life span per 1 g of adsorbent than the adsorbent of Example 6 in which the content of the basic compound was more than the content of the diatomaceous earth in the sulfur dioxide adsorption tests at humidities of 45 %RH and 20 %RH.

Thus, it was confirmed that the adsorption performance for sulfur dioxide, which is an acid gas, was improved by setting the content of the basic compound to be equal to or less than the content of the diatomaceous earth in the adsorbent containing glucose as a saccharide.

Subsequently, the adsorbents of Examples 1 and 3 to 5 in which the content of the basic compound is equal to or less than the content of the diatomaceous earth are compared with each other. The adsorbents of Examples 1, 3, and 5 in which the content of the glucose was equal to or less than the content of the diatomaceous earth had a longer life span per 1 g of adsorbent than the adsorbent of Example 4 in which the content of the glucose was more than the content of the diatomaceous earth in the sulfur dioxide adsorption test at a humidity of 45 %RH.

Thus, it was confirmed that the adsorption performance for sulfur dioxide, which is an acid gas, was improved by setting the content of the glucose to be equal to or less than the content of the diatomaceous earth in the adsorbent containing glucose as a saccharide.

### 3. Hydrogen sulfide adsorption test

The adsorbents obtained in Examples 2, 3, and 5 and Comparative Example 1 were tested for adsorption performance using hydrogen sulfide as an acid gas to be adsorbed.

### (1) Test method

Air adjusted to have a humidity of 50 %RH and contain 200 ppm of hydrogen sulfide was continuously passed through the adsorbents obtained in Examples 2, 3, and 5 and Comparative Example 1 so that the SV value was 5,252 h⁻¹. Then, the hydrogen sulfide concentration of the air on each of the upstream side and the downstream side of the adsorbent was measured. The adsorption efficiency of hydrogen sulfide to each of the adsorbents was calculated based on formula (2) below using the hydrogen sulfide concentration on the upstream side and the hydrogen sulfide concentration on the downstream side. The time until the adsorption efficiency fell below 85% was defined as a life span of the adsorbent. Adsorption efficieny (%)={1-(hydrogen concentration on downstream side/hydrogen sulfide concentration on upstream side)} × 100

### (2) Test results

Table 3 shows the weight (g) of the obtained adsorbent, the life span (h) measured by the above-described method, and the life span per 1 g of adsorbent (h/g) for Examples 2, 3, and 5 and Comparative Example 1.

**[Table 3]**

| | Weight (g) | Life span (h) | Life span/weight (h/g) |
|---|---|---|---|
| Example 2 | 4.0 | 21.0 | 5.25 |
| Example 3 | 4.4 | 0.1 | 0.02 |
| Example 5 | 2.9 | 2.5 | 0.86 |
| Comparative Example 1 | 4.7 | 0.01 | 0.002 |

As shown in Table 3, the adsorbents of Examples 2, 3, and 5 containing the diatomaceous earth, the basic compound, and the saccharide were confirmed to adsorb hydrogen sulfide, which is a weakly acidic gas, in the hydrogen sulfide adsorption test. The comparison between the adsorbents of Examples 2, 3, and 5 containing the diatomaceous earth, the basic compound, and the saccharide with the adsorbent of Comparative Example 1 containing no saccharide showed that the adsorbents of Examples 2, 3, and 5 had a longer life span per 1 g of adsorbent in the hydrogen sulfide adsorption test than the adsorbent of Comparative Example 1.

As a result, it was confirmed that the adsorption performance for hydrogen sulfide, which is a weakly acidic gas, was improved in the adsorbent containing the diatomaceous earth, the basic compound, and the saccharide as compared with the adsorbent containing no saccharide.

### 4. Estimation of crystalline structure of adsorbent

The crystalline structures of the adsorbents obtained in Examples 1 to 6 were estimated by X-ray diffraction.

In the adsorbent of Example 1, a diffraction peak corresponding to KH(Si₂O₅) was observed. In the adsorbents of Example 2, Example 3, and Example 6, diffraction peaks corresponding to KH(Si₂O₅) and K₄H₂(CO₃)₃·1.5H₂O were observed. In the adsorbent of Example 4, diffraction peaks corresponding to K₄H₂(CO₃)₃·1.5H₂O and K₂CO₃·1.5H₂O were observed. On the other hand, in the adsorbent of Example 5, diffraction peaks corresponding to compounds other than the diatomaceous earth and the saccharide were not observed.

Herein, each of the embodiments described above can be viewed as follows.

The adsorbent according to the present embodiment is an adsorbent for adsorbing an acid gas, and contains diatomaceous earth, a basic compound, and a saccharide.

In this case, a decrease in the adsorption performance of the adsorbent containing the diatomaceous earth and the basic compound can be suppressed as compared with the case where the adsorbent does not contain a saccharide.

The saccharide may be glucose.

In this case, the adsorption performance of the adsorbent for the acid gas can be improved as compared with the case of using a saccharide other than glucose.

The basic compound may be an alkali metal carbonate.

In this case, the crystallization of the basic compound can be further suppressed by the saccharide as compared with the case of using a basic compound other than alkali metal carbonates.

The content of the basic compound may be equal to or less than the content of the diatomaceous earth.

In this case, the adsorption performance of the adsorbent for the acid gas can be improved as compared with the case where the content of the basic compound is more than the content of the diatomaceous earth.

The content of the saccharide may be equal to or less than the content of the diatomaceous earth.

In this case, the adsorption performance of the adsorbent for the acid gas can be improved as compared with the case where the content of the saccharide is more than the content of the diatomaceous earth.

In another aspect, the method for producing an adsorbent according to the present embodiment is a method for producing an adsorbent for adsorbing an acid gas, and includes a step of producing a dispersion in which a basic compound and a saccharide are dispersed in water, a step of producing a mixture in which the dispersion and diatomaceous earth are mixed, and a step of removing water from the mixture.

In this case, the crystallization of the basic compound can be suppressed by the saccharide, and a decrease in the adsorption performance of the adsorbent containing the diatomaceous earth and the basic compound can be suppressed.

Although the embodiments have been described above, it will be understood that various changes in form and detail may be made therein without departing from the spirit and scope of the claims.

## Claims

1. An adsorbent for adsorbing an acid gas, comprising:
diatomaceous earth;
a basic compound; and
a saccharide.

2. The adsorbent according to claim 1, wherein the saccharide is glucose.

3. The adsorbent according to claim 2, wherein the basic compound is an alkali metal carbonate.

4. The adsorbent according to claim 3, wherein a content of the basic compound is equal to or less than a content of the diatomaceous earth.

5. The adsorbent according to claim 4, wherein a content of the saccharide is equal to or less than a content of the diatomaceous earth.

6. A method for producing an adsorbent for adsorbing an acid gas, the method comprising:
a step of producing a dispersion in which a basic compound and a saccharide are dispersed in water;
a step of producing a mixture in which the dispersion and diatomaceous earth are mixed; and
a step of removing water from the mixture.
